(19) Europäisches Patentamt
European Patent Office
Office européen des brevets

(11) Veröffentlichungsnummer : **0 591 103 A1**

(12) **EUROPÄISCHE PATENTANMELDUNG**

(21) Anmeldenummer : **93810662.2**

(22) Anmeldetag : **20.09.93**

(51) Int. Cl.[5] : **C09B 35/03,** C09B 35/039, C09B 56/04

(30) Priorität : **29.09.92 CH 3032/92**

(43) Veröffentlichungstag der Anmeldung : **06.04.94 Patentblatt 94/14**

(84) Benannte Vertragsstaaten : **BE CH DE ES FR GB IT LI**

(71) Anmelder : **CIBA-GEIGY AG**
**Klybeckstrasse 141**
**CH-4002 Basel (CH)**

(72) Erfinder : **Käser, Adolf, Dr.**
**Spitzackerstrasse 118**
**CH-4103 Bottmingen (CH)**
Erfinder : **Stingelin, Willy**
**Stockackerstrasse 1A**
**CH-4153 Reinach (CH)**

(54) **Disazofarbstoffe zum Färben von Papier.**

(57) Die Disazofarbstoffe der im Anspruch 1 aufgeführten Formeln (1), (2) und (3) eignen sich insbesondere zum Färben von Papier.

Papier wird mit diesen Farbstoffen in grünstichig gelben oder gelben bis roten Farbtönen und guten Echtheiten gefärbt.

EP 0 591 103 A1

Die vorliegende Erfindung betrifft Disazofarbstoffe, welche 1-Phenyl-5-aminopyrazole als Kupplungskomponente enthalten, die Herstellung dieser Farbstoffe sowie ihre Verwendung zum Färben von Papier.

Die erfindungsgemässen Farbstoffe entsprechen der Formel

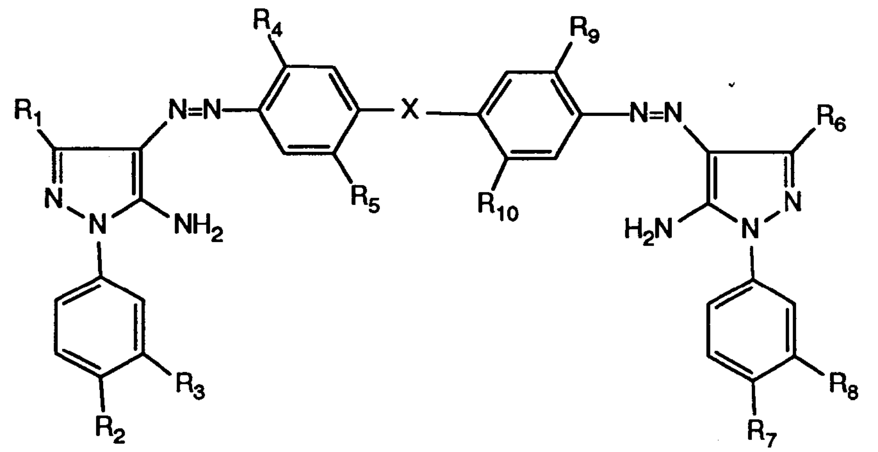

(1),

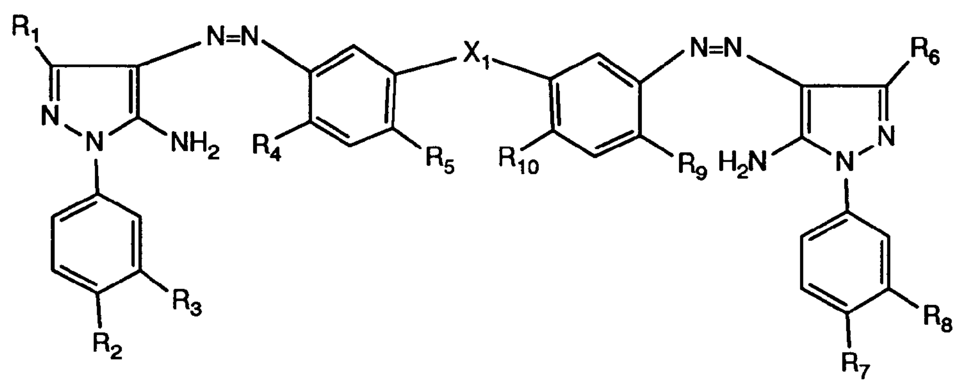

(2)

oder

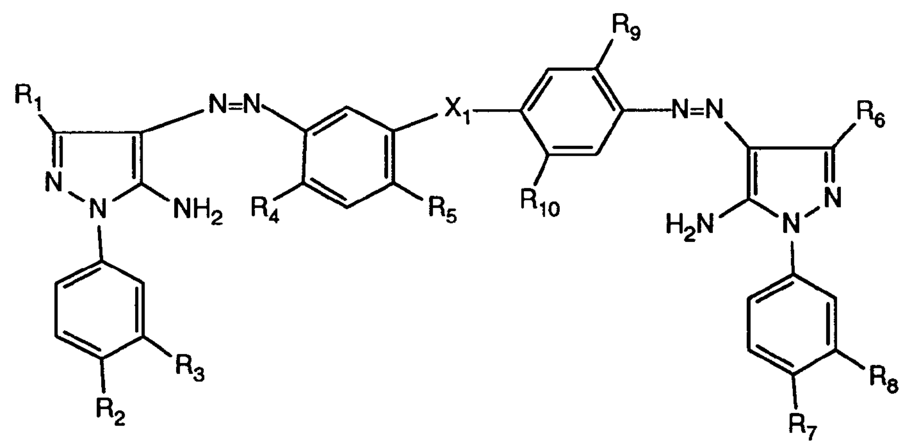

(3)

worin

$R_1$ und $R_6$ unabhängig voneinander je Wasserstoff, Alkyl, Alkenyl, Acylamino, Carbamoyl, Carboxy oder Alkoxycarbonyl,

$R_2$, $R_3$, $R_7$ und $R_8$ unabhängig voneinander je Wasserstoff, Halogen, Alkyl, Sulfo oder Carboxy,

$R_4$, $R_6$, $R_9$ und $R_{10}$ unabhängig voneinander je Wasserstoff, Halogen, Alkyl, Hydroxy, Alkoxy, Carboxy, Sulfo

oder Carboxyalkoxy,
X ein Brückenglied der Formel

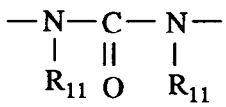 , 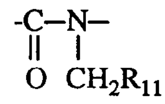 ,

-CO-$CH_2$-,

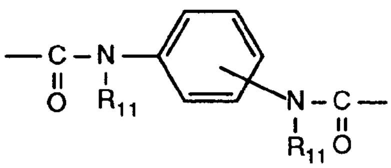 , 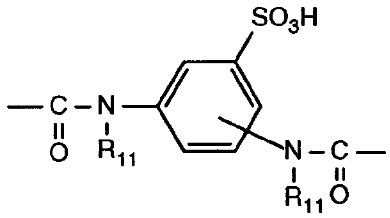 , 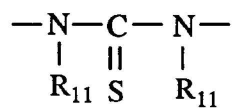

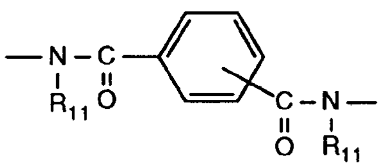 , 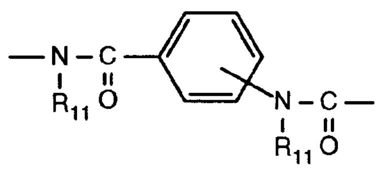 ,

-CH=CH-,

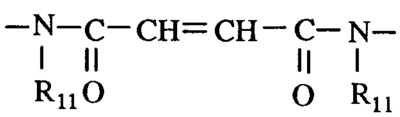 , 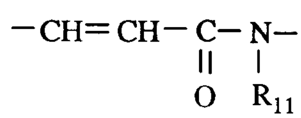 ,

-N=N-,

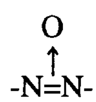 ,

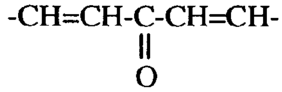 ,

-CH=CH-CH=CH- ,

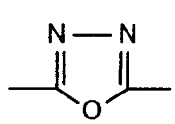 ,

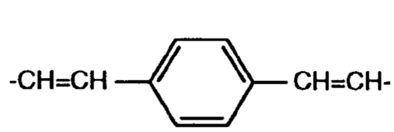 , 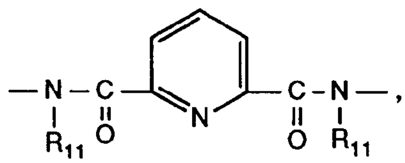 ,

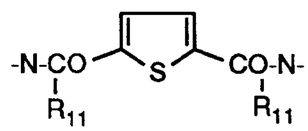 oder 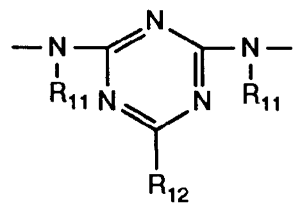

darstellt, wobei $R_{11}$ Wasserstoff oder gegebenenfalls substituiertes $C_1$-$C_6$-Alkyl und $R_{12}$ Chlor, Hydroxy, $-NH_2$ oder

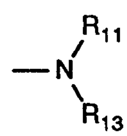

darstellt, wobei
$R_{11}$ die oben angegebene Bedeutung hat und
$R_{13}$ Wasserstoff, gegebenenfalls substituiertes $C_1$-$C_6$-Alkyl oder gegebenenfalls substituiertes Phenyl bedeutet oder worin $R_{11}$ und $R_{13}$ zusammen mit dem sie verbindenen Stickstoffatom einen 5- oder 6-Ring bilden, und
$X_1$ eine der für X angegebenen Bedeutungen aufweist oder eine direkte Bindung oder ein Brückenglied der Formel

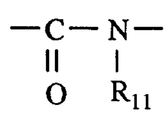 oder 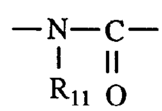

bedeutet.

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis 8 C-Aome auf.

Als unverzweigtes oder verzweigtes offenkettiges Alkyl kommen z.B. in Frage: Methyl, Ethyl, n- und iso-Propyl, n-, sec.- oder tert.Butyl, n- und iso-Pentyl, n- und iso-Hexyl oder 2-Ethylhexyl.

Diese Alkylreste können ein- oder mehrmals substituiert sein, beispielsweise durch Hydroxy, Sulfo, Carboxy, $C_1$-$C_4$-Alkoxy, durch Hydroxyl substituiertes $C_1$-$C_4$-Alkoxy, Phenyl, Phenoxy oder Phenylaminocarbonyl, wobei die Phenylgruppe in den drei letztgenannten Resten z.B. durch $C_1$-$C_4$-Alkyl, $C_1$-$C_4$-Alkoxy oder Phenoxy substituiert sein kann. Geeignete Reste dieser Art sind z.B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3, 1-Methyl-2-phenoxyethyl oder 1-Methyl-2-phenylaminocarbonylethyl.

Bei Cycloalkyl handelt es sich vor allem um Cyclopentyl und Cyclohexyl; als Substituent kommen vor allem $C_1$-$C_4$-Alkyl, insbesondere $CH_3$, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy.

Unter Halogen ist Fluor, Brom, Jod oder vor allem Chlor zu verstehen.

Als Alkenylreste kommen solche Reste in Betracht, welche sich von den oben aufgeführten Alkylresten durch Ersatz mindestens einer Einfachbindung durch eine Doppelbindung ableiten. Geeignete Reste sind z.B.

Ethenyl oder Propenyl.

Stellen $R_1$ und $R_6$ eine Acylaminogruppe dar, so handelt es sich beispielsweise um eine Gruppe der Formel

-NH-U-Y

wobei U -CO- oder $-SO_2-$ und Y gegebenenfalls substituiertes Alkyl oder Phenyl bedeutet.

Unter Phenylresten sind in dieser Anmeldung generell unsubstituierte oder substituierte Phenylreste zu verstehen. Als Substituenten kommen z.B. $C_1$-$C_4$-Alkyl, $C_1$-$C_4$-Alkoxy, Brom, Chlor, Nitro, Sulfo, Carboxy oder $C_1$-$C_4$-Alkylcarbonylamino in Betracht.

$R_1$ und $R_6$ bedeuten vorzugsweise unabhängig voneinander je Wasserstoff oder Alkyl, insbesondere je $C_1$-$C_4$-Alkyl.

$R_4$,$R_5$,$R_9$ und $R_{10}$ bedeuten vorzugsweise unabhängig voneinander je Wasserstoff, $C_1$-$C_4$-Alkyl, $C_1$-$C_4$-Alkoxy oder Sulfo, wobei Wasserstoff, $C_1$-$C_2$-Alkyl, $C_1$-$C_2$-Alkoxy oder Sulfo besonders bevorzugt sind. Ganz besonders bevorzugt ist die Verwendung von Farbstoffen der Formel (1), worin $R_4$, $R_5$, $R_9$ und $R_{10}$ je Wasserstoff oder Sulfo bedeuten.

Die bevorzugten Bedeutungen von $R_2$, $R_3$, $R_7$ und $R_5$ sind unabhängig voneinander je Wasserstoff, Chlor, Methyl oder Sulfo, vor allem Wasserstoff oder Sulfo.

Bei den Farbstoffen der Formel (1) bedeutet X vorzugsweise ein Brückenglied der Formel

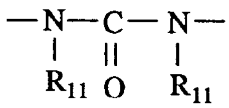 , 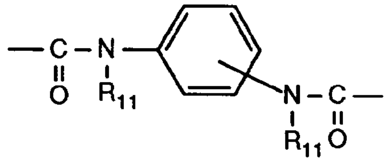 , 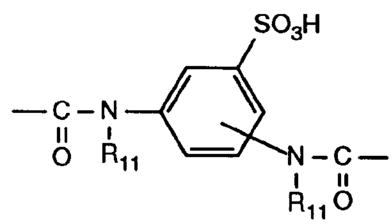 ,

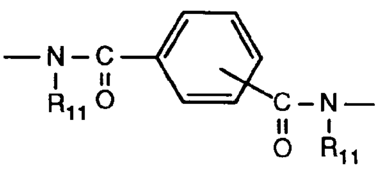 , 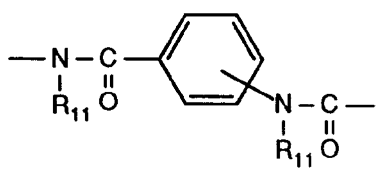 , 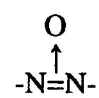 oder

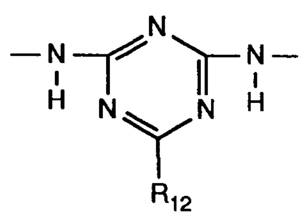 ,

wobei $R_{11}$ Wasserstoff oder $C_1$-$C_4$-Alkyl und $R_{12}$ Chlor, Hydroxy, $-NH_2$ oder

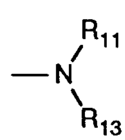

darstellt, wobei

$R_{11}$ die oben angegebene Bedeutung hat und

$R_{13}$ Wasserstoff, gegebenenfalls substituiertes $C_1$-$C_4$-Alkyl oder gegebenenfalls substituiertes Phenyl bedeutet.

Unter diesen sind diejenigen Farbstoffe der Formel (1) besonders bevorzugt, bei denen X ein Brückenglied der Formel

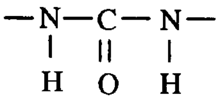, 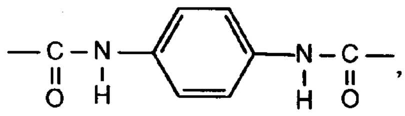, 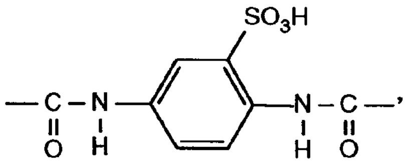,

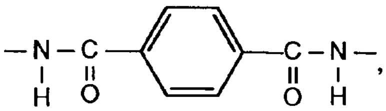, 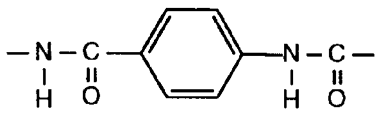, 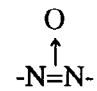 oder

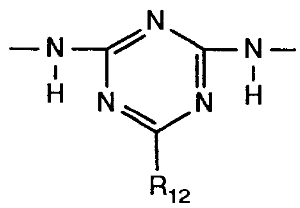

bedeutet, wobei $R_{12}$ Chlro, Hydroxy, $-NH_2$ oder

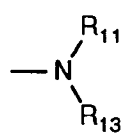

darstellt, wobei
$R_{11}$ Wasserstoff oder $C_1$-$C_4$-Alkyl und
$R_{13}$ Wasserstoff, gegebenenfalls substutiertes $C_1$-$C_4$-Alkyl oder Phenyl bedeutet.

Bei den Farbstoffen der Formeln (2) oder (3) bedeutet $X_1$ vorzugsweise eine direkte Bindung oder ein Brückenglied der Formel

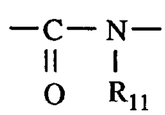, 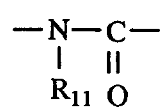,

-CH=CH-,

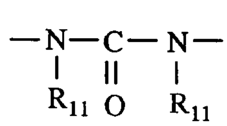, 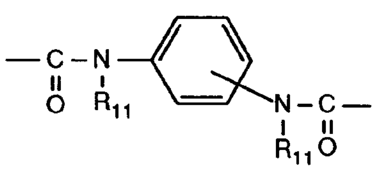, 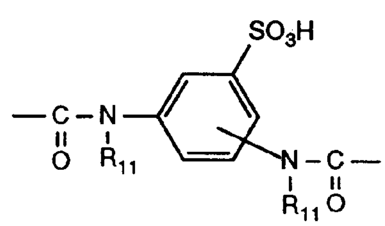,

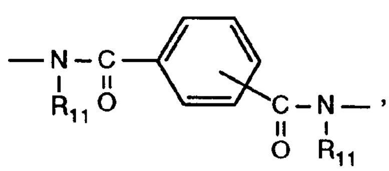, 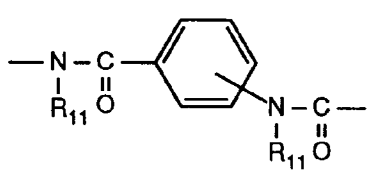, 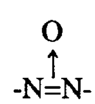 oder

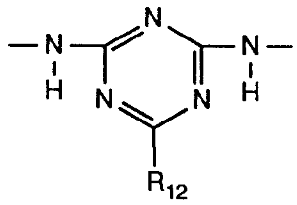

bedeutet, wobei $R_{11}$ Wasserstoff oder $C_1$-$C_4$-Alkyl und $R_{12}$ Chlor, Hydroxy, -$NH_2$ oder

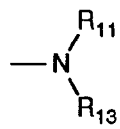

darstellt, wobei
$R_{11}$ die oben angegebene Bedeutung hat und
$R_{13}$ Wasserstoff, gegebenenfalls substituiertes $C_1$-$C_4$-Alkyl oder gegebenenfalls substituiertes Phenyl bedeutet.

Unter diesen sind diejenigen Farbstoffe der Formeln (2) oder (3) besonders bevorzugt, bei denen $X_1$ eine direkte Bindung oder ein Brückenglied der Formel

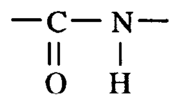 ,

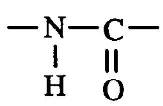 , 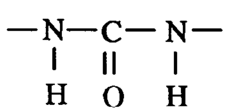 , 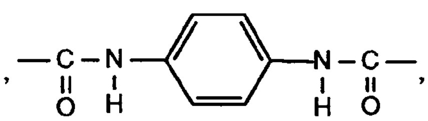 ,

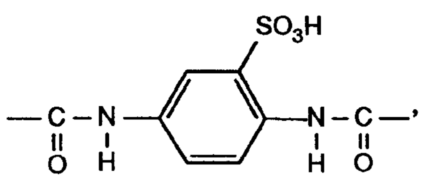 , 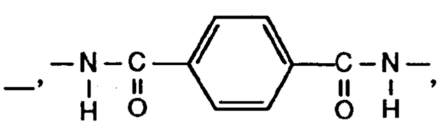 ,

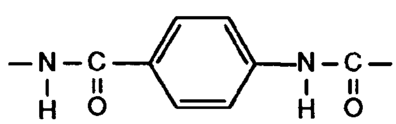 , 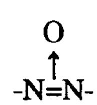 oder 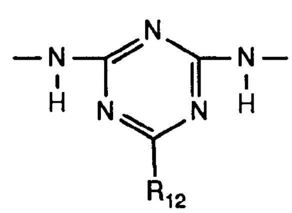 ,

wobei $R_{12}$ Chlor, Hydroxy, -$NH_2$ oder

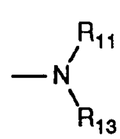

darstellt, wobei

$R_{11}$ Wasserstoff oder $C_1$-$C_4$-Alkyl und
$R_{13}$ Wasserstoff, $C_1$-$C_4$-Alkyl oder bedeutet.

In den Farbstoffen der Formel (1), (2) und (3) sind vorzugsweise mindestens zwei Sulfogruppen vorhanden, die als freie Säure ($-SO_3H$) oder in Salzform ($-SO_3M$) vorliegen können. Bevorzugt befinden sich diese Sulfogruppen in den Positionen der Substituenten $R_2$ bis $R_5$ und $R_7$ bis $R_{10}$. Zwei bis vier und insbesondere zwei Sulfogruppen sind bevorzugt. M bedeutet vorzugsweise ein Aequivalent eines farblosen Kations, beispielsweise Lithium, Natrium, Kalium, Ammonium oder die protonierte Form eines $C_4$-$C_{12}$-Trialkylamins, $C_4$-$C_{12}$-Diamins, $C_2$-$C_{12}$-Alkanolamins oder eines Polyglykolamins, z.B. Triethanolamin-trisglykolether.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar.

Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes $C_2$-$C_{12}$-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin.

Vorzugsweise hat M die Bedeutung $Na^{\oplus}$, $Li^{\oplus}$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Die Farbstoffe der Formeln (1), (2) oder (3) werden auf an sich bekannte Art und Weise hergestellt, beispielsweise indem man ein Diamin der Formel

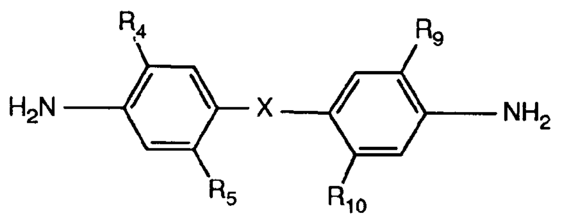

(4),

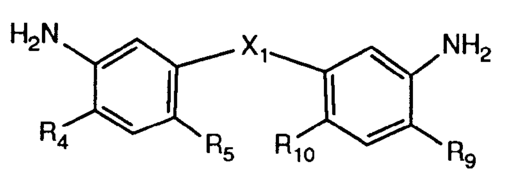

(5)

oder

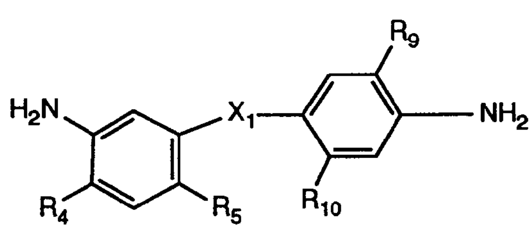

(6)

tetrazotiert und mit einer oder mehreren Kupplungskomponenten der Formel

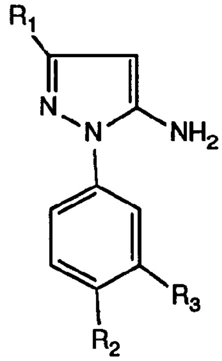

(7)

kuppelt, wobei $R_1$, $R_2$, $R_3$, $R_4$, $R_5$, X und $X_1$ die unter den Formeln (1), (2) und (3) angegebenen Bedeutungen besitzen. Vorzugsweise setzt man nur eine Kupplungskomponente ein. Tetrazotierung und Kupplung werden auf übliche Weise durchgeführt.

Falls X oder $X_1$ ein Brückenglied der Formel

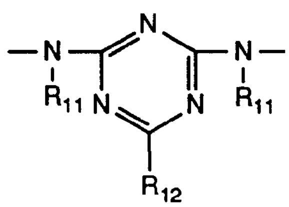

ist, kann man auch eine Verbindung der Formel

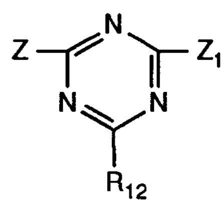

,

worin Z und $Z_1$ je Halogen bedeuten, mit einem Amin der Formel

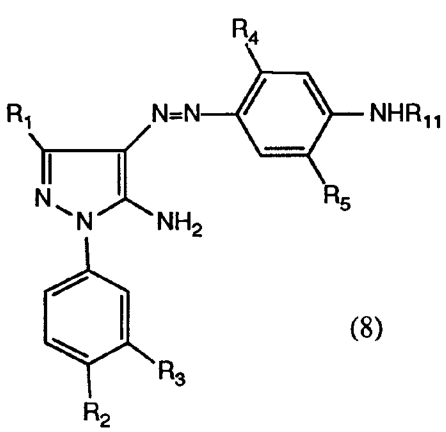

(8)

und/oder

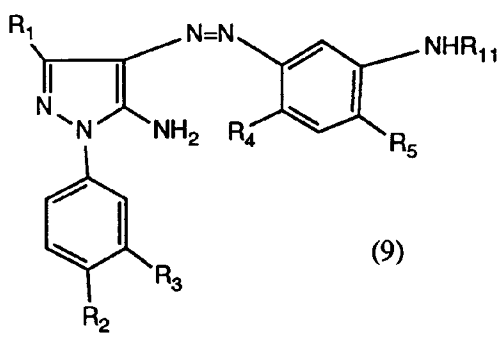

(9)

umsetzen, wobei $R_1$, $R_2$, $R_3$, $R_4$, $R_5$, $R_{11}$ und $R_{12}$ die unter den Formeln (1), (2) und (3) angegebenen Bedeutungen besitzen. Die Umsetzung erfolgt auf übliche, an sich bekannte Art und Weise.

Die Farbstoffe der Formel (1), (2) und (3) eignen sich insbesondere zum Färben von Papier, da sie eine hohe Substantivität auf dieses Substrat aufweisen. Man erhält Färbungen in gelben, grünstichig gelben oder roten Farbtönen, die sich durch gute Echtheiten auszeichnen.

Die Farbstoffe der Formel (1), (2) und (3) können als feste oder flüssige Handelsform formuliert und zum Färben von Papier eingesetzt werden.

Als Pulver oder Granulat werden die Farbstoffe insbesondere bei der diskontinuierlichen Massefarbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstaubungsmittel und Sequestriermittel, wie Tetranatriumpyrophosphat, enthalten können.

Ein weiterer Gegenstand der Erfindung sind somit feste Farbstoffzubereitungen zum Farben von Papier, welche Farbstoffe der Formel (1), (2) oder (3) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Farbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (1), (2) oder (3), welche dadurch gekennzeichnet sind, dass sie mindestens 5, beispielsweise 8 bis 30 Gewichtsprozent Farbstoff, bezogen auf das Gesamtgewicht der Lösung, enthalten.

Konzentrierte wässrige Lösungen von Farbstoffen der Formel (1), (2) oder (3) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilfsmitteln, wie Harnstoff, ε-Caprolactam oder Polyethylenglykol stabilisiert. Man kann aber auch den isolierten Farbstoff in Salzsäure anschlämmen, erneut filtrieren und den Filterkuchen mit Lithiumhydroxid oder einem geeigneten Amin, z.B. einem Alkanolamin, und der nötigen Menge Wasser vermischen. Schliesslich kann man auch die Kupplung in Gegenwart von Lithiumhydroxid, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff in Form der freien Säure 400 bis 900 Teile Wasser, 0 bis 200 Teile weitere Zusätze wie Harnstoff, ε-Caprolactam oder Polyethylenglykol sowie soviel Base, dass der pH-Wert zwischen 7 und 10 liegt. Als Basen kommen z.B. Natrium- und Lithiumhydroxid, Ammoniak oder organische Amine, z.B. Alkanolamine in Betracht.

Die erfindungsgemässen wässrigen Konzentrate, die bei Lagerungstemperaturen bis zu -5°C stabil sind, eignen sich zum Färben von Papier, auf welchem sie mit oder ohne Verwendung einer Schlichte attraktive gelbe bis rote Farbtöne ergeben.

Die Farbstoffe der Formel (1), (2) und (3) können ausserdem auch zum Färben von Textilmaterialien aus Cellulose, z.B. Baumwolle, sowie zum Färben von Leder und Glasfasern eingesetzt werden.

In den nachfolgenden Beispielen beziehen sich Teile und Prozente auf das Gewicht und die Temperaturen sind in Celsiusgraden angegeben.

Beispiel 1:

46 Teile 4-Aminoacetanilid-3-sulfonsäure werden in 200 Teilen Wasser und 48 Teilen 32 %iger Salzsäure angeschlämmt und durch Zugabe von 13,8 Teilen Natriumnitrit bei 0 bis 5° C diazotiert. Der pH-Wert wird kurz vor der Kupplung mit 30 %iger Natronlauge auf 6,5 gestellt.

34,6 Teile 3-Methyl-1-phenyl-5-aminopyrazol werden in 200 Teilen Wasser angeschlämmt und mit Natronlauge auf einen pH-Wert von 8,5 gestellt. Die erhaltene Suspension wird innerhalb von 10 Minuten zu der oben beschrieben Suspension der Diazokomponente gegeben. Durch Zugabe von ca. 27 Teilen 30 %iger Natronlauge wird bei einem pH-Wert von 8,5 zuerst während 2 Stunden bei Raumtemperatur und dann während 2 Stunden bei 40° C gekuppelt.

Zur Abspaltung der Schutzgruppe werden 130 Teile 30 %ige Natronlauge zugegeben und während 2 Stunden bei 90° C verrührt. Dann wird die erhaltene Farbstofflösung auf 20° C gekühlt, durch Zugabe von 116 Teilen 32 %iger Salzsäure auf einen pH-Wert von 4 gestellt und mit 90 Teilen Natriumchlorid ausgesalzt und filtriert.

79,8 Teile des erhaltenen Farbstoffs werden in 800 Teilen Wasser und 4 Teilen 30 %iger Natronlauge bei

einem pH-Wert von 7 gelöst und durch Zugabe von 15 Teilen Cyanurchlorid während 3 Stunden bei 0 bis 2° C mit diesem kondensiert, wobei der pH-Wert mit 10 Teilen 30 %iger Natronlauge bei 7 gehalten wird. Dann wird innerhalb einer Stunde auf 40° C erwarmt und die Kondensation durch Zugabe von 16 Teilen 30 %iger Natronlauge während 8 Stunden bei einem pH-Wert von 8,5 zu Ende geführt.

Anschliessend gibt man 9,8 Teile Ethanolamin zu und verrührt während 4 Stunden bei 95° C. Der erhaltene Farbstoff wird mit 50 Teilen Natriumchlorid ausgesalzt und bei Raumtemperatur filtriert. Man erhält 75 Teile des Farbstoffes der Formel

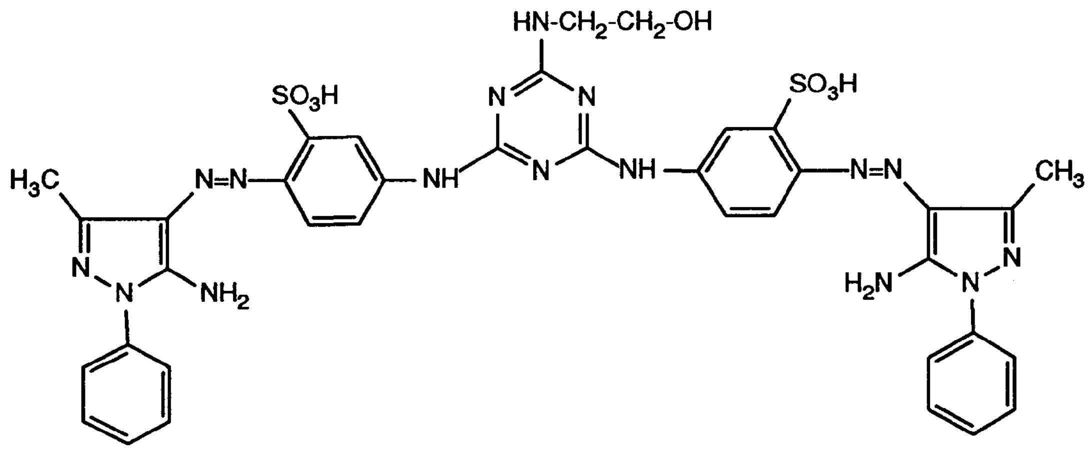

Er färbt Papier in gelben Tönen mit guten Echtheiten und zeichnet sich durch eine hohe Substantivität aus.

Beispiel 2:

30,7 Teile 4,4'-Diaminobenzanilid-3-sulfonsäure werden in 300 Teilen Wasser und 48 Teilen 32 %iger Salzsäure angeschlämmt und durch Zugabe von 13,8 Teilen Natriumnitrit bei 0 bis 5° C tetrazotiert. Der pH-Wert wird kurz vor der Kupplung mit ca. 5 Teilen Natriumacetat auf 2,5 gestellt.

52 Teile 3-Methyl-1-(3-sulfophenyl)-5-aminopyrazol werden in 200 Teilen Wasser mit Natronlauge bei einem pH-Wert von 6 gelöst. Die erhaltene Lösung wird bei 0 bis 5° C innerhalb von 30 Minuten zu der oben beschrieben Suspension der Tetrazokomponente gegeben. Durch Zugabe von 30 %iger Natronlauge wird der pH-Wert zwischen 4 und 5 gehalten. Man lässt auf Raumtemperatur erwärmen und führt die Kupplung bei einem pH-Wert von 6 bis 7 zu Ende. Der erhaltene Farbstoff wird mit 100 Teilen Natriumchlorid ausgesalzt, filtriert und getrocknet. Man erhält 80 Teile des Farbstoffes der Formel

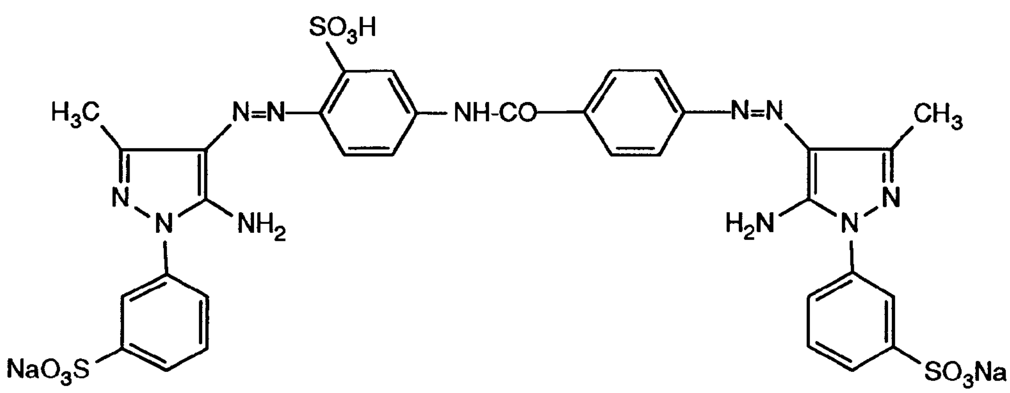

Er färbt Papier in gelben Tönen mit guten Echtheiten und zeichnet sich durch eine hohe Substantivität aus.

Beispiel 3:

Arbeitet man wie im Beispiel 2 beschrieben, verwendet jedoch anstelle von 4,4'-Diaminobenzanilid-3-sulfonsäure eine äquivalente Menge 4,4'-Diaminobenzanilid-3,6-disulfonsäure, so erhält man bei im übrigen gleicher Arbeitsweise einen Farbstoff, der Papier ebenfalls in gelben Farbtönen mit guten Echtheiten färbt.

Beispiele 4 bis 10:

Auf analoge Art wie im Beispiel 1 beschrieben, werden die folgenden Farbstoffe hergestellt, die Papier in gelben Farbtönen mit guten Echtheiten färben.

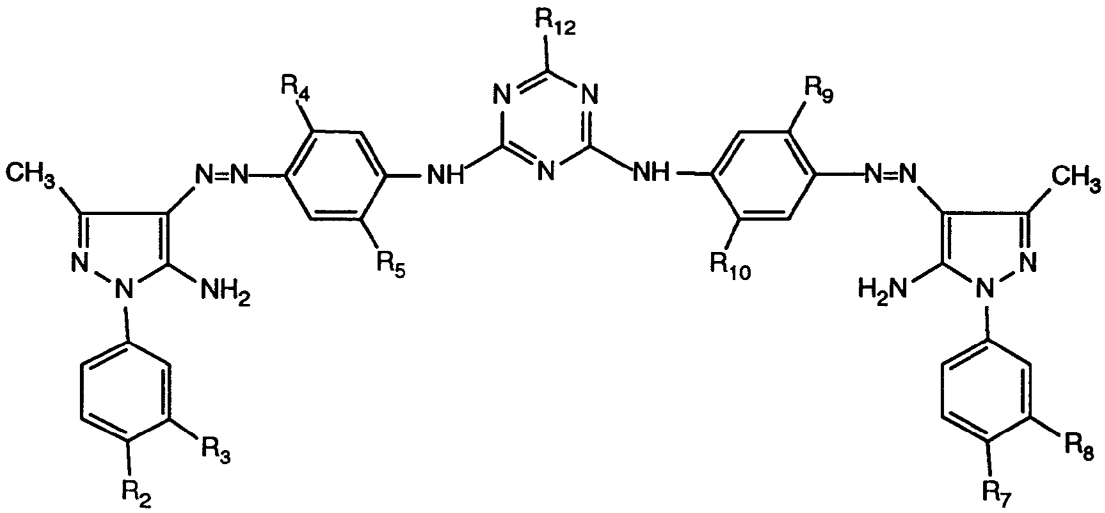

| Bsp. | $R_2$, $R_7$ | $R_3$, $R_8$ | $R_4$, $R_9$ | $R_5$, $R_{10}$ | $R_{12}$ |
|---|---|---|---|---|---|
| 4 | H | H | $SO_3H$ | H | 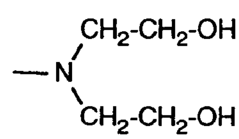 |
| 5 | H | H | $SO_3H$ | H | 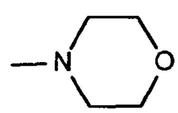 |
| 6 | H | H | $SO_3H$ | H | 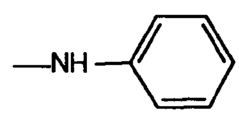 |

| | | | | | |
|---|---|---|---|---|---|
| 7 | H | H | H | $SO_3H$ | 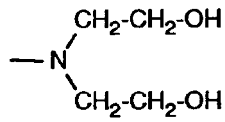 |
| 8 | $SO_3H$ | H | H | H | 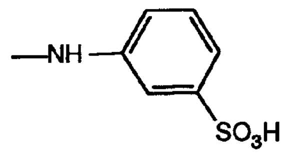 |
| 9 | H | $SO_3H$ | H | H | 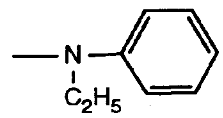 |
| 10 | Cl | H | $SO_3H$ | H | 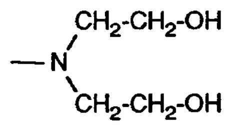 |

Beispiele 11 bis 15:

Auf analoge Art wie im Beispiel 2 beschrieben, werden die folgenden Farbstoffe hergestellt, die Papier in gelben Farbtönen mit guten Echtheiten färben.

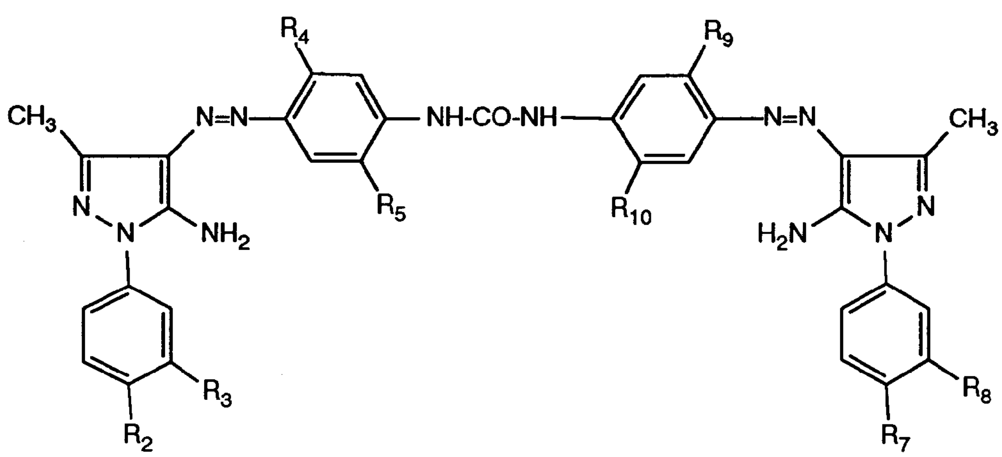

| Bsp. | $R_2$, $R_7$ | $R_3$, $R_8$ | $R_4$, $R_9$ | $R_5$, $R_{10}$ |
|---|---|---|---|---|
| 11 | H | H | $SO_3H$ | H |
| 12 | H | H | H | $SO_3H$ |
| 13 | $SO_3H$ | H | H | H |
| 14 | H | $SO_3H$ | H | H |

| | | | | |
|---|---|---|---|---|
| 15 | H | Cl | $SO_3H$ | H |

Beispiele 16 bis 22:

Auf analoge Art wie im Beispiel 2 beschrieben, werden die folgenden Farbstoffe hergestellt, die Papier in grünstichig gelben Farbtönen mit guten Echtheiten färben.

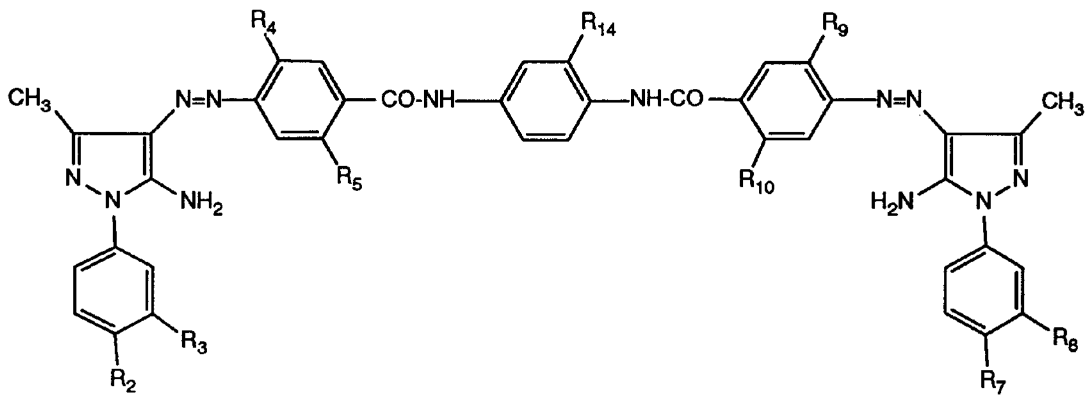

| Bsp. | $R_2$, $R_7$ | $R_3$, $R_8$ | $R_4$, $R_9$ | $R_5$, $R_{10}$ | $R_{14}$ |
|---|---|---|---|---|---|
| 16 | H | H | $SO_3H$ | H | H |
| 17 | H | H | H | $SO_3H$ | H |
| 18 | $SO_3H$ | H | H | H | H |
| 19 | H | $SO_3H$ | H | H | H |
| 20 | H | $SO_3H$ | H | H | $SO_3H$ |
| 21 | Cl | H | $SO_3H$ | H | $SO_3H$ |
| 22 | H | $SO_3H$ | $SO_3H$ | H | H |

Beispiele 23 bis 28:

Auf analoge Art wie im Beispiel 2 beschrieben, werden die folgenden Farbstoffe hergestellt, die Papier in gelben Farbtönen mit guten Echtheiten färben.

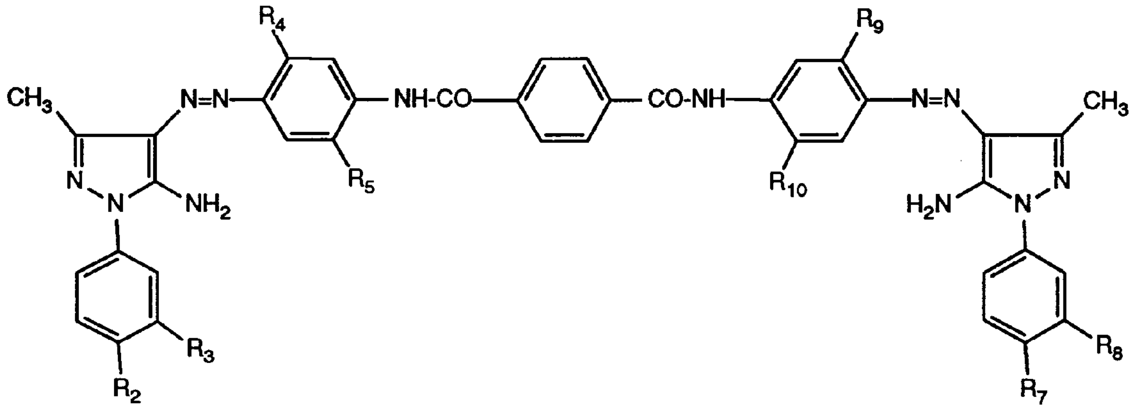

| Bsp. | $R_2$, $R_7$ | $R_3$, $R_8$ | $R_4$, $R_9$ | $R_5$, $R_{10}$ |
|---|---|---|---|---|
| 23 | H | H | $SO_3H$ | H |
| 24 | H | H | H | $SO_3H$ |
| 25 | $SO_3H$ | H | H | H |
| 26 | H | $SO_3H$ | H | H |
| 27 | Cl | H | $SO_3H$ | H |
| 28 | H | $SO_3H$ | $SO_3H$ | H |

Beispiele 29 bis 31:

Auf analoge Art wie im Beispiel 2 beschrieben, werden die folgenden Farbstoffe hergestellt, die Papier in gelben (Beisp. 29 und 30) bzw. roten (Beisp.31) Farbtönen mit guten Echtheiten farben.

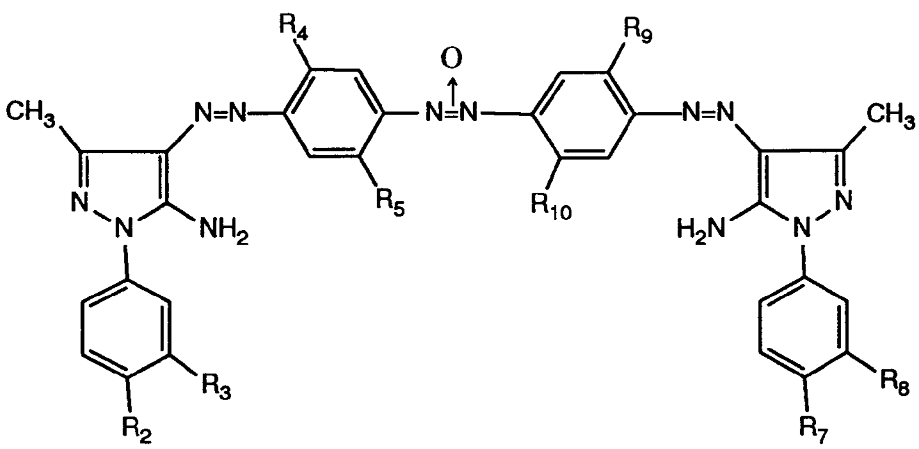

| Bsp. | $R_2$, $R_7$ | $R_3$, $R_8$ | $R_4$, $R_9$ | $R_5$, $R_{10}$ |
|---|---|---|---|---|
| 29 | $SO_3H$ | H | H | H |
| 30 | H | $SO_3H$ | H | H |
| 31 | H | $SO_3H$ | $OCH_3$ | H |

Beispiele 32 bis 34:

Auf analoge Art wie im Beispiel 2 beschrieben, werden die folgenden Farbstoffe hergestellt, die Papier in gelben Farbtönen mit guten Echtheiten färben.

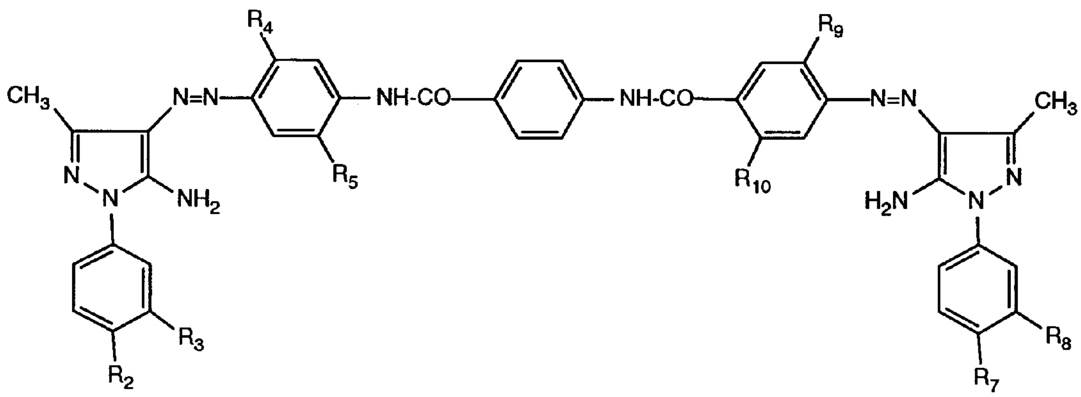

| Bsp. | $R_2$, $R_7$ | $R_3$, $R_8$ | $R_4$, $R_9$ | $R_5$, $R_{10}$ |
|---|---|---|---|---|
| 32 | H | H | $SO_3H$ | H |
| 33 | H | $SO_3H$ | H | H |
| 34 | $SO_3H$ | H | H | H |

Beispiele 35 bis 47:

Auf analoge Art wie im Beispiel 2 beschrieben, werden die folgenden Farbstoffe hergestellt, die Papier in grünstichig gelben Farbtönen mit guten Echtheiten färben.

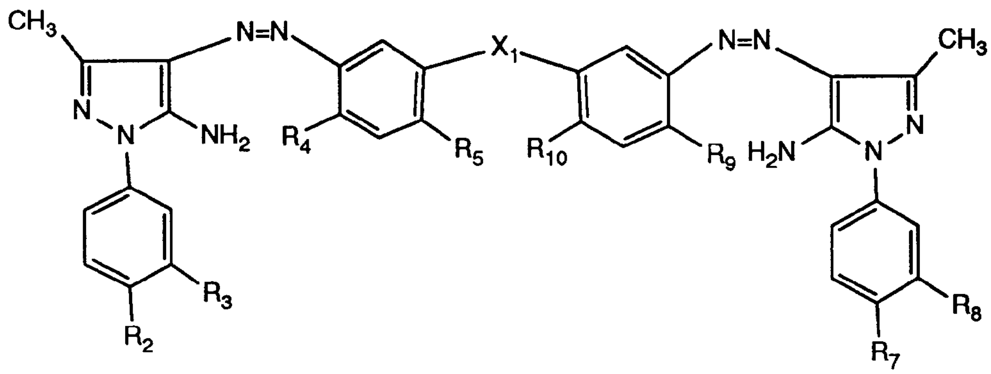

| Bsp. | $R_2$, $R_7$ | $R_3$, $R_8$ | $R_4$, $R_9$ | $R_5$, $R_{10}$ | $X_1$ |
|---|---|---|---|---|---|
| 35 | H | H | $SO_3H$ | H | -NH-CO- |
| 36 | H | $SO_3H$ | H | H | -NH-CO- |
| 37 | $SO_3H$ | H | H | H | -NH-CO- |
| 38 | H | H | $SO_3H$ | H | 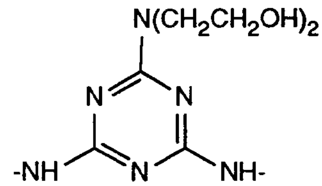 |
| 39 | H | $SO_3H$ | H | H | 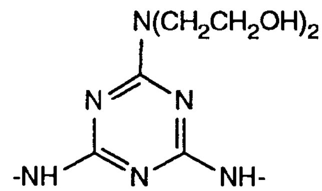 |

| | | | | | |
|---|---|---|---|---|---|
| 40 | $SO_3H$ | H | H | H | 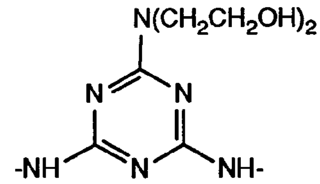 |
| 41 | Cl | H | $SO_3H$ | H | 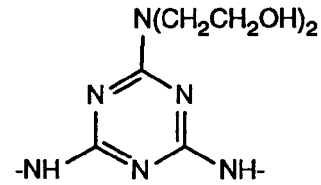 |
| 42 | H | H | $SO_3H$ | H | 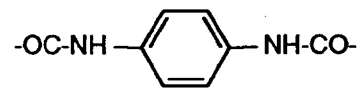 |
| 43 | H | $SO_3H$ | H | H | 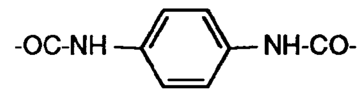 |
| 44 | $SO_3H$ | H | H | H | 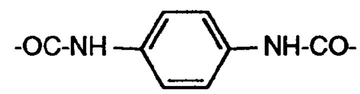 |
| 45 | H | H | $SO_3H$ | H | 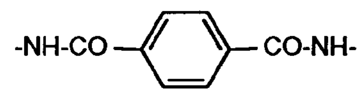 |
| 46 | H | $SO_3H$ | H | H | 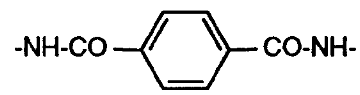 |
| 47 | $SO_3H$ | H | H | H | 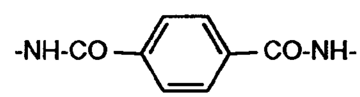 |

Beispiele 48 bis 53:

Auf analoge Art wie im Beispiel 2 beschrieben, werden die folgenden Farbstoffe hergestellt, die Papier in grünstichig gelben Farbtönen mit guten Echtheiten färben.

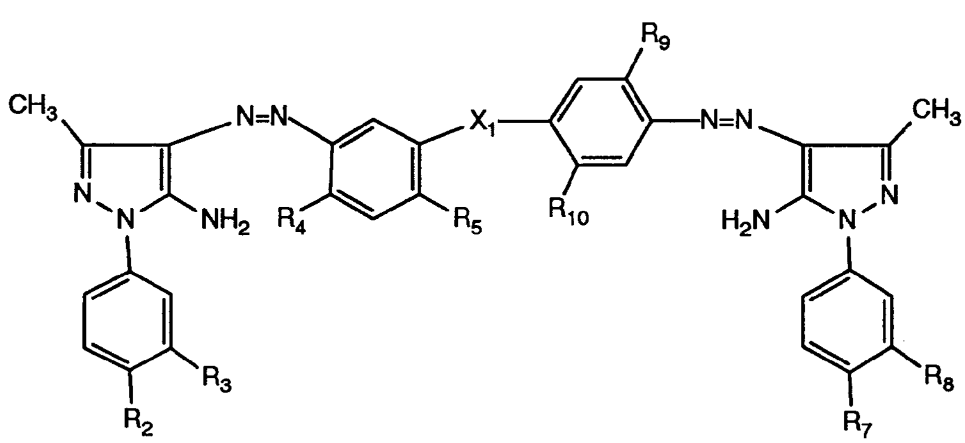

| Bsp. | $R_2$, $R_7$ | $R_3$, $R_8$ | $R_4$, $R_9$ | $R_5$, $R_{10}$ | $X_1$ |
|---|---|---|---|---|---|
| 48 | $SO_3H$ | H | H | H | -NH-CO- |
| 49 | H | H | $SO_3H$ | H | -NH-CO- |
| 50 | H | H | $SO_3H$ | H | 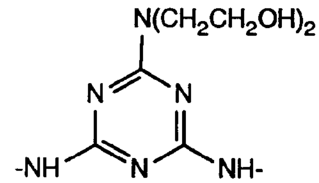 |
| 51 | H | H | H | $SO_3H$ | 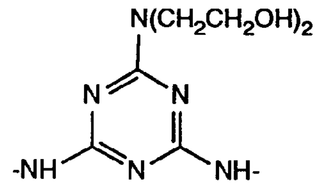 |
| 52 | $SO_3H$ | H | H | H | 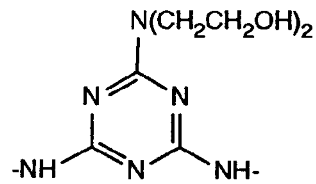 |
| 53 | H | $SO_3H$ | H | H | 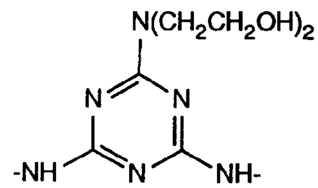 |

Beispiel 54:

Arbeitet man wie im Beispiel 2 beschrieben, verwendet jedoch anstelle von 4,4'-Diaminobenzanilid-3-sulfonsäure eine äquivalente Menge 4,4'-Diaminobenzanilid-3,6-disulfonsäure und anstelle von 3-Methyl-1-(3-sulfophenyl)-5-aminopyrazol eine äquivalente Menge 3-Methyl-1-phenyl-5-aminopyrazol, so erhält man bei im übrigen gleicher Arbeitsweise den Farbstoff der Formel

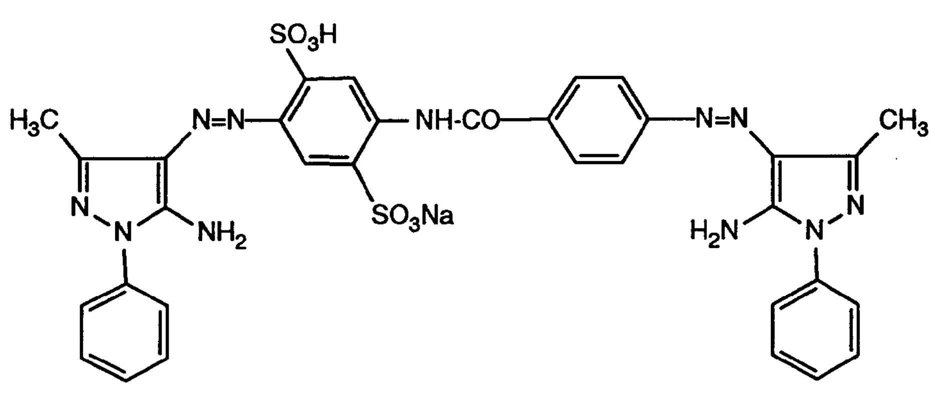

Dieser farbt Papier ebenfalls in gelben Farbtönen mit guten Echtheiten.

Beispiel 55:

0,5 Teile des Farbstoffpulvers aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine gelbe Nuance mit guten Nassechtheiten.

## Patentansprüche

1. Farbstoffe der Formel

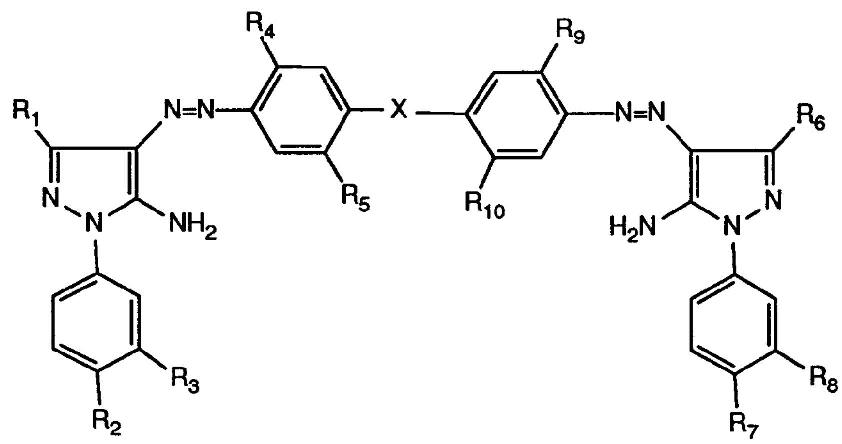

(1),

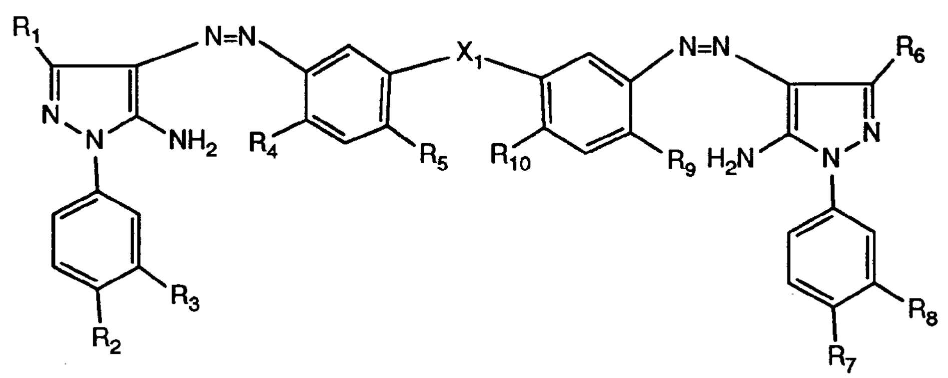

(2)

oder

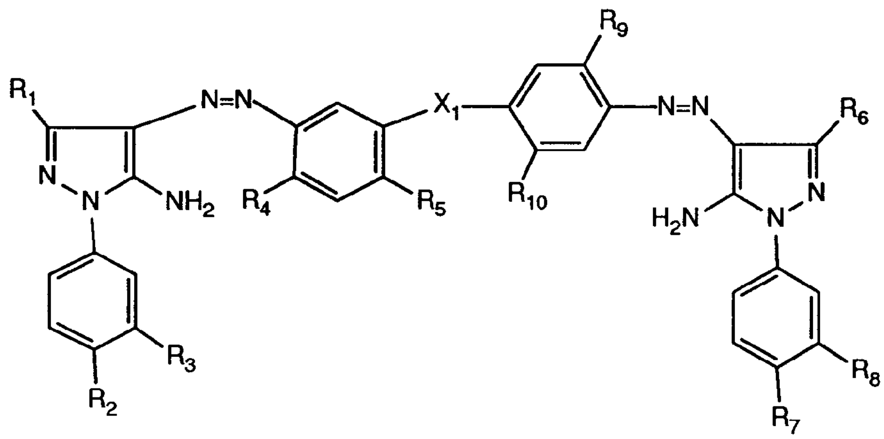

(3)

worin

$R_1$ und $R_6$ unabhängig voneinander je Wasserstoff, Alkyl, Alkenyl, Acylamino, Carbamoyl, Carboxy oder Alkoxycarbonyl,

$R_2$, $R_3$, $R_7$ und $R_8$ unabhängig voneinander je Wasserstoff, Halogen, Alkyl, Sulfo oder Carboxy,

$R_4$, $R_8$, $R_9$ und $R_{10}$ unabhängig voneinander je Wasserstoff, Halogen, Alkyl, Hydroxy, Alkoxy, Carboxy, Sulfo oder Carboxyalkoxy,

X ein Brückenglied der Formel

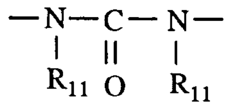 , 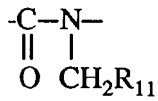 ,

-CO-$CH_2$-,

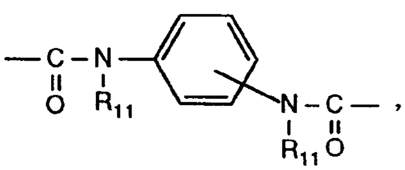 , 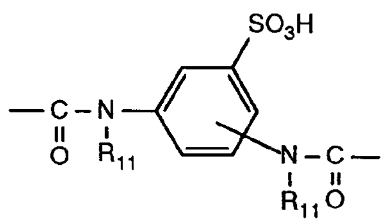 , 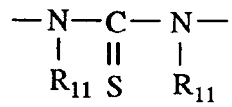

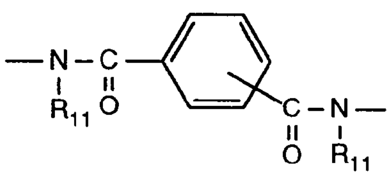 , 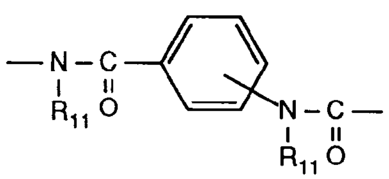 ,

-CH=CH-,

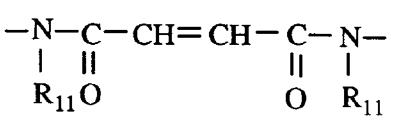 , 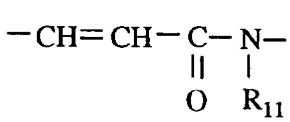 ,

-N=N-,

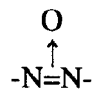,

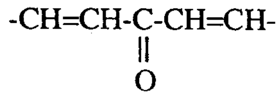,

-CH=CH-CH=CH-,

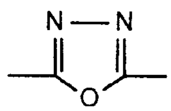,

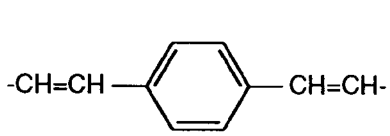, 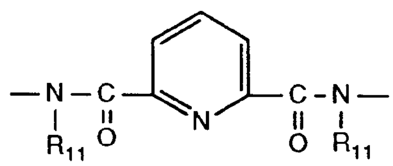,

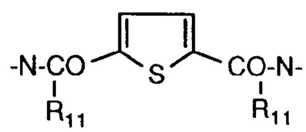 oder 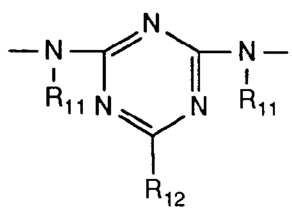

darstellt, wobei $R_{11}$ Wasserstoff oder gegebenenfalls substituiertes $C_1$-$C_6$-Alkyl und $R_{12}$ Chlor, Hydroxy, $-NH_2$ oder

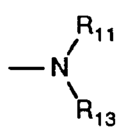

darstellt, wobei
$R_{11}$ die oben angegebene Bedeutung hat und
$R_{13}$ Wasserstoff, gegebenenfalls substituiertes $C_1$-$C_6$-Alkyl oder gegebenenfalls substituiertes Phenyl bedeutet oder worin $R_{11}$ und $R_{13}$ zusammen mit dem sie verbindenen Stickstoffatom einen 5- oder 6-Ring bilden, und
$X_1$ eine der für X angegebenen Bedeutungen aufweist oder eine direkte Bindung oder ein Brückenglied der Formel

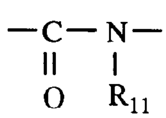 oder 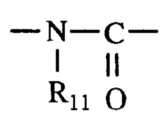

bedeutet.

2. Farbstoffe gemäss Anspruch 1, worin R1 und $R_6$ unabhängig voneinander je Wasserstoff oder Alkyl bedeuten.

3. Farbstoffe gemäss Anspruche 2, worin $R_1$ und $R_6$ unabhängig voneinander je $C_1$-$C_4$-Alkyl bedeuten.

4. Farbstoffe gemäss einem der Ansprüche 1 bis 3, worin $R_4$, $R_6$, $R_9$ und $R_{10}$ unabhängig voneinander je Wasserstoff, $C_1$-$C_4$-Alkyl, $C_1$-$C_4$-Alkoxy oder Sulfo bedeuten.

5. Farbstoffe gemäss Anspruch 4, worin $R_4$, $R_5$, $R_9$ und $R_{10}$ unabhängig voneinander je Wasserstoff, $C_1$-$C_2$-Alkyl, $C_1$-$C_2$-Alkoxy oder Sulfo bedeuten.

6. Farbstoffe gemäss Anspruch 5, worin $R_4$, $R_5$, $R_9$ und $R_{10}$ unabhängig voneinander je Wasserstoff oder Sulfo bedeuten.

7. Farbstoffe gemäss einem der Ansprüche 1 bis 6, worin $R_2$, $R_3$, $R_7$ und $R_6$ unabhängig voneinander je Wasserstoff, Chlor, Methyl oder Sulfo bedeuten.

8. Farbstoffe gemäss Anspruch 7, worin $R_{2,}$ $R_3$, $R_7$ und $R_8$ unabhängig voneinander je Wasserstoff oder Sulfo bedeuten.

9. Farbstoffe gemäss einem der Ansprüche 1 bis 8, worin X ein Brückenglied der Formel

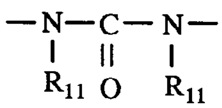 , 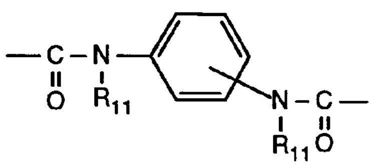 , 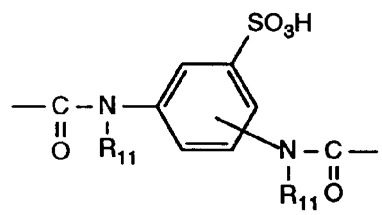 ,

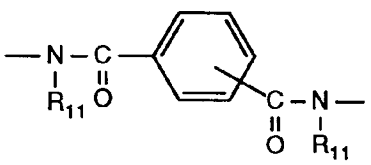 , 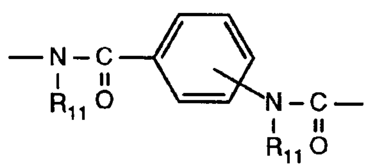 , 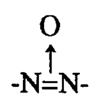 oder

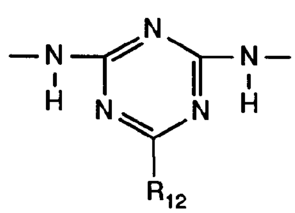

bedeutet, wobei $R_{11}$ Wasserstoff oder $C_1$-$C_4$-Alkyl und $R_{12}$ Chlor, Hydroxy, $-NH_2$ oder

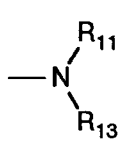

darstellt, wobei
$R_{11}$ die oben angegebene Bedeutung hat und
$R_{13}$ Wasserstoff, gegebenenfalls substituiertes $C_1$-$C_4$-Alkyl oder gegebenenfalls substituiertes Phenyl bedeutet.

10. Farbstoffe gemäss Anspruch 9, worin X ein Brückenglied der Formel

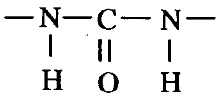, 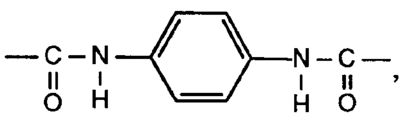, 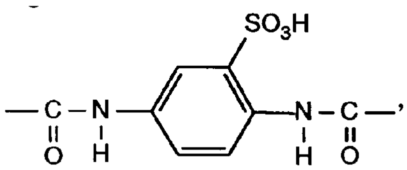

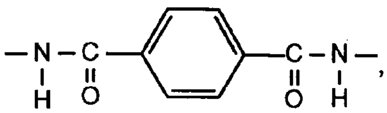, 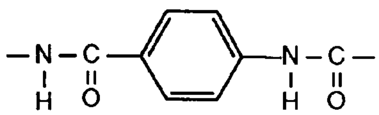, 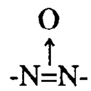 oder

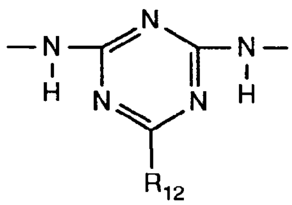

bedeutet, wobei $R_{12}$ Chlor, Hydroxy, $-NH_2$ oder

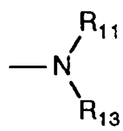

darstellt, wobei
$R_{11}$ Wasserstoff oder $C_1$-$C_4$-Alkyl und
$R_{13}$ Wasserstoff, gegebenenfalls substiertes $C_1$-$C_4$-Alkyl oder Phenyl bedeutet.

**11.** Farbstoffe gemäss einem der Ansprüche 1 bis 8, worin
$X_1$ eine direkte Bindung oder ein Brückenglied der Formel

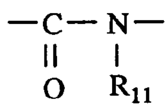,

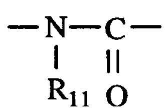,

-CH=CH-,

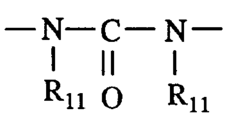, 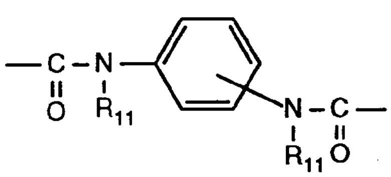,

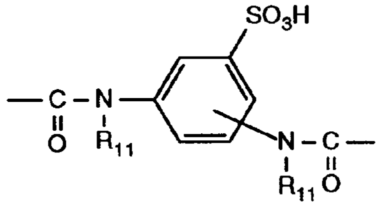,
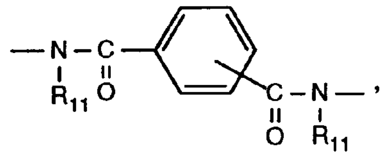,

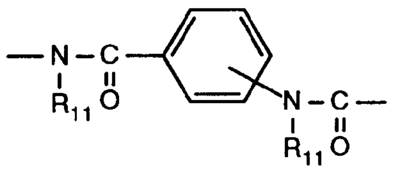,
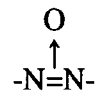
oder
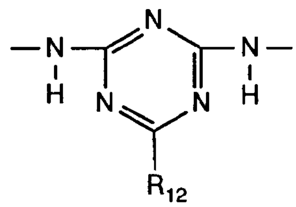

bedeutet, wobei $R_{11}$ Wasserstoff oder $C_1$-$C_4$-Alkyl und $R_{12}$ Chlor, Hydroxy, $-NH_2$ oder

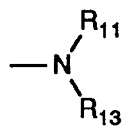

darstellt, wobei $R_{11}$ die oben angegebene Bedeutung hat und $R_{13}$ Wasserstoff, gegebenenfalls substituiertes $C_1$-$C_4$-Alkyl oder gegebenenfalls substituiertes Phenyl bedeutet.

**12.** Farbstoffe gemäss Anspruch 11, worin X1 eine direkte Bindung oder ein Brückenglied der Formel

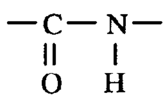,
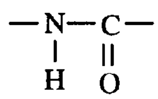,
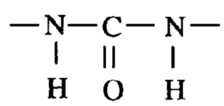,

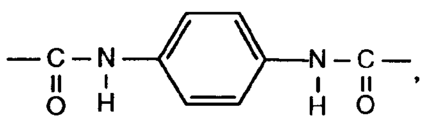,
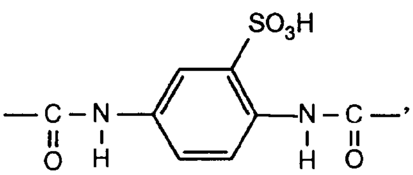,

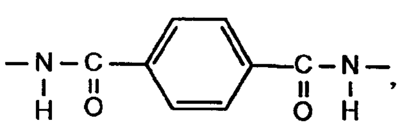,
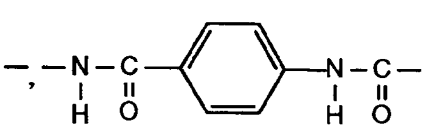,
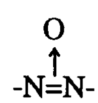
oder

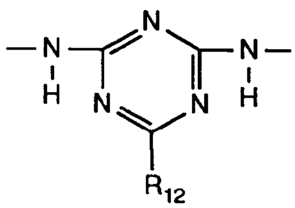 ,

wobei $R_{12}$ Chlor, Hydroxy, $-NH_2$ oder

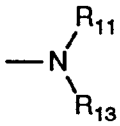

darstellt, wobei
$R_{11}$ Wasserstoff oder $C_1$-$C_4$-Alkyl und
$R_{13}$ Wasserstoff, $C_1$-$C_4$-Alkyl oder bedeutet.

**13.** Farbstoffe gemäss einem der Ansprüche 1 bis 12, welche mindestens 2 Sulfogruppen enthalten.

**14.** Farbstoffe gemäss Anspruch 13, welche 2 bis 4, insbesondere 2 Sulfogruppen enthalten.

**15.** Verfahren zum Farben von Papier, dadurch gekennzeichnet, dass man Farbstoffe der Formel (1), (2) oder (3) gemäss Anspruch 1 verwendet.

**16.** Feste Farbstoffzubereitungen zum Farben von Papier, welche Farbstoffe der Formel (1), (2) oder (3) gemäss den Ansprüchen 1 bis 14 enthalten.

**17.** Konzentrierte wässrige Lösungen von Farbstoffen der Formeln (1), (2) oder (3) dadurch gekennzeichnet, dass sie 8 bis 30 Gewichtsprozent Farbstoff, bezogen auf das Gesamtgewicht der Lösung, enthalten.

**18.** Konzentrierte wässrige Lösungen gemäss Anspruch 17, dadurch gekennzeichnet, dass der Farbstoff in Form eines Lithium- oder Alkanolaminsalzes, insbesondere eines Diäthanolamin-, Triäthanolamin- oder Polyglykolaminsalzes vorliegt.

**19.** Verwendung von festen Farbstoffzubereitungen oder konzentrierten wässrigen Lösungen gemäss den Ansprüchen 16 bis 18 zum Farben von Papier.

**20.** Das mit Hilfe der Farbstoffe gemäss den Ansprüchen 1 bis 14 oder deren festen Zubereitungen und wässrigen Lösungen gemäss den Ansprüchen 16 bis 18 gefärbte Papier.

Europäisches Patentamt

# EUROPÄISCHER RECHERCHENBERICHT

Nummer der Anmeldung
EP 93810662.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| X | DE - A - 2 527 395 (BAYER AG) * Anspruch 1; Seite 2, letzter Absatz; Seite 4, Zeilen 11-12; Seite 6, Beispiel 10 * -- | 1-8, 11-15, 19,20 | C 09 B 35/03<br>C 09 B 35/039<br>B 09 B 56/04 |
| X | CH - A - 647 795 (SANDOZ AG) * Ansprüche * ---- | 1-15, 20 | |

| RECHERCHIERTE SACHGEBIETE (Int Cl.5) |
|---|
| C 09 B |

Der vorliegende Recherchenbericht wurde für alle Patentansprüche erstellt.

| Recherchenort | Abschlußdatum der Recherche | Prüfer |
|---|---|---|
| WIEN | 23-12-1993 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82